# EUROPEAN PATENT APPLICATION

(11) **EP 1 596 574 A2**
(43) Date of publication of application: **16.11.2005**
(21) Application number: 05010207.8
(22) Date of filing: 11.05.2005
(51) Int. Cl.: H04N 1/60

(54) **Apparatus and program storage medium for data generation and evaluation output**

(30) Priority: 14.05.2004 JP 2004144804
(71) Applicant: Fuji Photo Film Co. Ltd., Kanagawa 250-0193 (JP)
(72) Inventor: Shimazaki, Osamu, Ashigarakami-gun Kanagawa 258-8538 (JP)
(74) Representative: Klunker . Schmitt-Nilson . Hirsch

(57) **Abstract**

A data generating apparatus comprises an image obtaining section that obtains image data representative of an image, an evaluation receiving section that receives an input of an evaluation as to a color of the image represented by the image data obtained by the image obtaining section, and a data set generation section that generates an evaluation image data set in such a way that the image data obtained by the image obtaining section is associated with evaluation data representative of the evaluation received by the evaluation receiving section.

## Description

### BACKGROUND OF THE INVENTION

### Field of the Invention

The present invention relates to a data generating apparatus for generating data, a data generating program storage medium, an evaluation output apparatus for outputting evaluation of colors of an image, an evaluation output program storage medium, and an evaluation output system.

### Description of the Related Art

Hitherto, in a field of printing, it is widely performed that a printed matter is created through an image taking step of obtaining a photographic image through photography of a subject, an editing step of editing an image of the printed matter using the photographic image, and a printing step of printing the edited image. Recently, a digital camera is widely used in the image taking step, and as a digitalization of the photographic image obtained in the image taking step is advanced, processing of the editing step and the printing step is also varied.

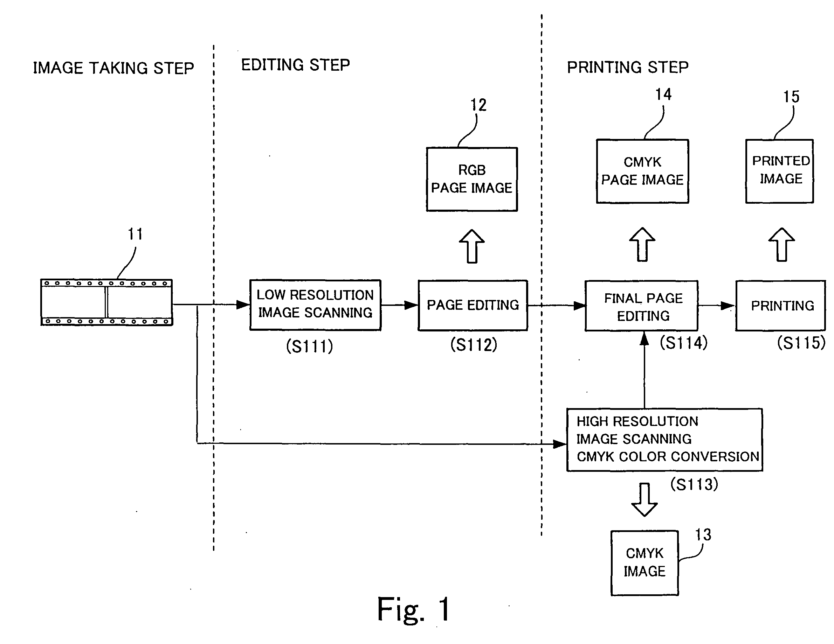

Fig. 1 is a work flowchart useful for understanding a series of printing processing wherein a silver halide camera for recording a photographic image on a film is applied in the image taking step.

In the image taking step, the silver halide camera is used to take a photograph of a subject, and a photographic image is recorded on a film 11. The film 11 is transferred from the image taking step to the editing step.

In the editing step, first, a scanner and the like roughly reads the photographic image recorded on the film 11 so as to generate low resolution data through the color separation into R (red), G (green), and B (blue), for instance (step S111).

An editor, who is an operator in the editing step, uses a personal computer and the like to edit an image of the printed matter including a low resolution of image represented by a RGB type of low resolution data that is obtained in the step S111 (step S112). As a data format, which is used when an editor edits pages, there is generally used a format in which pages are described in a page description language such as PS (PostScript: registered trademark) and PDF (Portable Document Format). And thus, hereinafter, image data representative of an image (page) of the printed matter after the edition is referred to as page data. In the page editing step of the step S112, an RGB format of page image 12 included in the page data is printed out by a printer and the like to confirm designs of the page using the RGB format of page image 12. The page data, which is subjected to confirmation of the design, is transferred to the printing step together with the film 11.

In the printing step, first, a scanner and the like is used to read the photographic image recorded on the film 11 on a high resolution basis, and simultaneously, in order that a printing machine may express the whole colors through superposition of C (cyan), M (magenta), Y (yellow) and K (black) on one another, the image data thus read is converted into a CMYK format of high resolution data, which is suitable for the printing machine (step S113). At that time, a printing operator in the printing step performs a fine control for various parameters as to a tone curve, sharpness and the like so that colors of a CMYK image 13 represented by the CMYK format of high resolution data may be close to colors of the photographic image of the film 11 in impression as much as possible, and performs a color conversion processing using the various parameters.

The CMYK format of high resolution data thus generated is replaced by a RGB format of low resolution data of the page data transmitted from the editing step, so that a CMYK format of high resolution page data is generated (step S114). Also in the step S114, a CMYK page image 14 represented by a CMYK format of page data is printed out so that a printing operator confirms designs and colors of the final page using the CMYK page image 14.

The finally confirmed CMYK format of page data is transmitted to a printing machine to print a printed image 15 (step S115).

In a case where a photographic image is recorded on a film, the printed image 15 is created in the manner as mentioned above. A series of printing processing shown in Fig. 1 is conventionally performed. Accordingly, also in the process, which needs a sophisticated technique, for example, control of various sorts of parameters in the step S113, it is possible to utilize know-how accumulated. However, according to the work flowchart in Fig. 1, all of the image taking step, the editing step and the printing step needs the film 11 on which a photographic image is recorded. In this case, in the event that the respective steps are carried out in mutually different area, it would take a lot of time for the delivery of the film 11, and there would be raised a possibility that the film 11 is lost. This involves a problem that the printed matter cannot be created.

Next, there will be explained a series of printing processing when the photographic image is digitized.

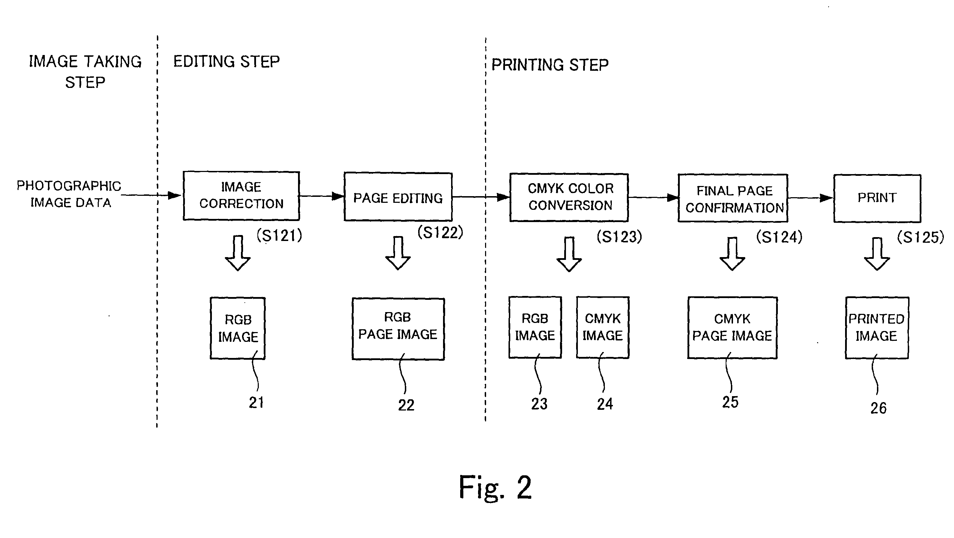

Fig. 2 is a work flowchart useful for understanding a series of printing processing wherein a digital camera is applied in the image taking step.

In the image taking step, photographic image data, which is obtained when the digital camera is used to photography a subject, is recorded on a compact sized recording medium and the like, and is transferred to the editing step.

In the editing step, an editor performs a fine control for various parameters (for example, the tone curve) as to a color correction so that colors of an RGB image 21 represented by the photographic image data may be preferable colors in impression, and color correction processing is applied to the photographic image data (step S121). The photographic image data after the color correction is saved in DB 20 for the sake of reuse.

Next, the editor edits a page using the photographic image data after the color correction (step S122). Also in the step S122, an RGB page image 22 represented by the generated page data is printed out, and the editor confirms designs and colors of the page.

The page data after confirmation of the designs and colors is transferred to a printing step.

In the printing process, first, an RGB image 23 represented by the photographic image data after the color correction of the page data transmitted from the editing step is printed out. In a similar fashion to that of the step S113 in Fig. 1, a printing operator performs a fine control for various parameters as to a color conversion, and an RGB format of photographic image data is converted into a CMYK format of photographic image data (step S123). At that time, the printing operator controls various parameters so that colors of a CMYK image 24 represented by the CMYK format of photographic image data may be close to colors of the RGB image 23.

Further, in the printing process, the RGB format of photographic image data of the page data transmitted from the editing step is replaced by a CMYK format of photographic image data, so that a CMYK format of page data is generated. The editor confirms designs and colors of the final page using CMYK page image 25 represented by the CMYK format of page data (step S124).

The finally confirmed CMYK format of page data is transmitted to a printing machine to print out a printed image 26 (step S125).

In the manner as mentioned above, a digital photographic image is obtained in the image taking step. This feature makes it possible to reuse the photographic image saved in the DB20 in the editing step (cf. for example, Japanese Patent Laid Open Gazette TokuKai Hei. 9-90599), and also to readily copy the photographic image. Accordingly, it is possible to resolve such an inconvenience that the printed matter cannot be created because of missing of a film. Further, even if the respective steps are carried out in mutually different area, it is possible to transmit the photographic image through communication networks and the like.

However, the work for the color correction by an editor in the step S121 in Fig. 2 is only performed when a digital camera is used in the image taking step, and thus the know-how is not sufficiently accumulated. Accordingly, there is a need for an editor to perform a color control through trial and error so that colors of the RGB image 21 become colors be nice to look at. This work takes a great deal of time, and it often happen that no intended colors may be obtained. As a result, in the step S123 of the printing step, a printing operator would perform a color control taking as a color sample the RGB image 23 involved in no accumulation of know-how such as the film 11 that is used for the conventional color regulation, under the uncertain condition as to whether it has editor's intended colors. This work would take great deal of time and cost. Further, even if such a color regulation is performed so that the colors of the CMYK image 24 are close to the colors of the RGB image 23, it would happen that colors of a printed matter 26, which is the final creation, don't match the color image of the editor's intended printed matter, since the colors of the RGB image 23 are uncertain per se.

In order to avoid such a trouble, there is proposed a matter that when image data is sent from the editing step to the printing step, a label, on which various sorts of information as to color correction processing, such as a profile name that is used at the time of the color correction in the editing step, is applied to a recording medium such as a CD-ROM on which image data after the color correction is recorded, so that an editor's requirement is surely conveyed to the subsequent printing step (cf. "WORKING GUIDEBOOK OF RGB IMAGE FOR PRINTING ENTRY" page 7, A SOCIETY FOR THE STUDY OF RGB DIGITAL IMAGE STANDARDIZATION).

However, according to the technology proposed by the above-cited reference "WORKING GUIDEBOOK OF RGB IMAGE FOR PRINTING ENTRY" page 7, A SOCIETY FOR THE STUDY OF RGB DIGITAL IMAGE STANDARDIZATION, it would happen that the label applied to the recording medium comes off during conveyance, and in the event that the photographic image is transmitted through a communication network, it is impossible to surely convey an editor's requirement to the printing step. Further, in the event that image data is copied to another recording medium, there is a need to create a new label and apply the new label to the new recording medium. This work is very troublesome in maintenance.

### SUMMARY OF THE INVENTION

In view of the foregoing, it is an object of the present invention to provide a data generating apparatus capable of surely conveying information for generating an image of a preferable color to the subsequent step, an evaluation output apparatus, an evaluation output system, a data generating program storage medium, and an evaluation output program storage medium.

To achieve the above-mentioned objects, the present invention provides a data generating apparatus comprising:
an image obtaining section that obtains image data representative of an image;
an evaluation receiving section that receives an input of an evaluation as to a color of the image represented by the image data obtained by the image obtaining section; and
a data set generation section that generates an evaluation image data set in such a way that the image data obtained by the image obtaining section is associated with evaluation data representative of the evaluation received by the evaluation receiving section.

According to the data generating apparatus of the present invention as mentioned above, the image data representative of an image is associated with the evaluation data representative of the evaluation related to a color of the image so as to generate the evaluation image data set. For example, in the editing step in a series of printing workflow, the evaluation image data set is generated, and the evaluation image data set is transmitted to the printing step. This feature makes it possible to surely convey an evaluation as to a color of an image to the subsequent printing step, even in the event that the evaluation image data set is transmitted via a communication network and the like. In the printing step, the evaluation represented by the evaluation data of the evaluation image data set is confirmed. This feature makes it possible to perform the color conversion processing reflecting an editor's request. Thus, it is possible to greatly reduce the cost and time, and also to create an image having a preferable color.

In the data generating apparatus according to the present invention as mentioned above, it is preferable that the data generating apparatus further comprises an image recording section that records the evaluation image data set generated in the data set generation section on a recording medium.

It is noted that the recording medium referred to in the present invention includes not only a recording medium that is detachably mounted on a personal computer and the like, for example, a CD-ROM and a compact flash (registered trademark), but also a temporary memory that is incorporated into a personal computer, for example, a hard disk unit and ROM.

Storage of the evaluation image data set on the recording medium makes it possible to re-use the evaluation image data set at the time of the editing work repeatedly, and in addition to efficiently transmit the evaluation image data set to the subsequent step such as the printing step.

In the data generating apparatus according to the present invention as mentioned above, it is preferable that the data set generation section generates an evaluation incorporation data corresponding to the evaluation image data set in such a way that the evaluation data is incorporated into the image data.

Incorporation of the evaluation data into the image data makes it possible to readily associate the image data with the evaluation data, and in addition to avoid such an inconvenience that the image data is separated from the evaluation data.

In the data generating apparatus according to the present invention as mentioned above, it is preferable that the data generating apparatus further comprises a page data generation section that generates page data representative of a page in which an image is arranged, in such a way that the evaluation image data set generated in the data set generation section is incorporated into the page data.

For example, in the editing step of a series of printing workflow, the evaluation image data set is generated so as to generate page data. This feature makes it possible to surely convey an evaluation as to a color of an image to the subsequent printing step using the conventional printing system.

To achieve the above-mentioned objects, the present invention provides an evaluation output apparatus comprising:
a data set obtaining section that obtains an evaluation image data set in which image data representative of an image is associated with evaluation data representative of an evaluation as to a color of the image represented by the image data; and
an evaluation output section that causes an output apparatus to output the evaluation represented by the evaluation data of the evaluation image data set obtained by the data set obtaining section.

According to the evaluation output apparatus of the present invention as mentioned above, the evaluation image data set is obtained, and the evaluation output section causes an output apparatus to output the evaluation represented by the evaluation data of the evaluation image data set. This feature makes it possible for an operator to surely recognize the evaluation as to a color of the image represented by the image data of the evaluation image data set.

In the evaluation output apparatus according to the present invention as mentioned above, it is preferable that the evaluation output apparatus further comprises an image display section that displays an image based on the image data, and
the evaluation output section causes the output apparatus to output the evaluation, wherein as the output apparatus the image display section is used.

According to the evaluation output apparatus according to the present invention, the image display section displays an image based on the image data of the evaluation image data set. This feature makes it possible to surely convey the evaluation as to the color of the image represented by the image data, saving the cost.

In the evaluation output apparatus according to the present invention as mentioned above, it is preferable that as the output apparatus a printer for printing out images and characters on a sheet is used, so that the evaluation output section causes the printer to print out the evaluation.

This feature makes it possible to surely convey the evaluation as to the color of the image represented by the image data.

To achieve the above-mentioned objects, the present invention provides an evaluation output system comprising:
an image obtaining section that obtains image data representative of an image;
an evaluation receiving section that receives an input of an evaluation as to a color of the image represented by the image data obtained by the image obtaining section;
a data set generation section that generates an evaluation image data set in such a way that the image data obtained by the image obtaining section is associated with evaluation data representative of the evaluation received by the evaluation receiving section;
a data set obtaining section that obtains the evaluation image data set;
an evaluation output section that causes an output apparatus to output the evaluation represented by the evaluation data of the evaluation image data set obtained by the data set obtaining section.

According to the evaluation output system of the present invention as mentioned above, it is possible to surely convey to an operator the evaluation as to the color of the image represented by the image data.

To achieve the above-mentioned objects, the present invention provides a data generating program storage medium storing a data generating program which causes a computer to operate as a data generating apparatus, when the data generating program is executed in the computer, the data generating apparatus comprising:
an image obtaining section that obtains image data representative of an image;
an evaluation receiving section that receives an input of an evaluation as to a color of the image represented by the image data obtained by the image obtaining section; and
a data set generation section that generates an evaluation image data set in such a way that the image data obtained by the image obtaining section is associated with evaluation data representative of the evaluation received by the evaluation receiving section.

According to the data generating program storage medium storing a data generating program, it is possible to cause the computer to operate as the data generating apparatus, when the data generating program is executed in the computer.

With respect to the structural elements such as the image obtaining section constituting the data generating program related to the present invention, it is acceptable that function of one structural element is implemented by one program part, function of one structural element is implemented by a plurality of program parts, or alternatively functions of a plurality structural elements are implemented by one program part. Further, it is acceptable that those structural elements are executed by oneself or by instruction to another program or program parts incorporated into a computer.

To achieve the above-mentioned objects, the present invention provides an evaluation output program storage medium storing an evaluation output program, which causes a computer to operate as evaluation output program, when the evaluation output program is executed in the computer, the evaluation output apparatus comprising:
a data set obtaining section that obtains an evaluation image data set in which image data representative of an image is associated with evaluation data representative of an evaluation as to a color of the image represented by the image data; and
an evaluation output section that causes an output apparatus to output the evaluation represented by the evaluation data of the evaluation image data set obtained by the data set obtaining section.

According to the evaluation output program storage medium storing an evaluation output program, it is possible to cause the computer to operate as the evaluation output apparatus, when the evaluation output program is executed in the computer.

With respect to the structural elements such as the data set obtaining section constituting the evaluation output program related to the present invention, it is acceptable that function of one structural element is implemented by one program part, function of one structural element is implemented by a plurality of program parts, or alternatively functions of a plurality structural elements are implemented by one program part. Further, it is acceptable that those structural elements are executed by oneself or by instruction to another program or program parts incorporated into a computer.

### BRIEF DESCRIPTION OF THE DRAWINGS

Fig. 1 is a work flowchart useful for understanding a series of printing processing wherein a silver halide camera for recording a photographic image on a film is applied in the image taking step.
Fig. 2 is a work flowchart useful for understanding a series of printing processing wherein a digital camera is applied in the image taking step.
Fig. 3 is an overall structural view of a printing system to which an embodiment of an evaluation output system of the present invention is applied.
Fig. 4 is a perspective view of a personal computer.
Fig. 5 is a hardware structural view of the personal computer.
Fig. 6(A) is a conceptual view of a CD-ROM storing a data generating program as an embodiment of the present invention.
Fig. 6(B) is a conceptual view of a CD-ROM storing an evaluation output program as an embodiment of the present invention.
Fig. 7 is a functional block diagram of an editing apparatus and a color conversion apparatus.
Fig. 8 is a flowchart useful for understanding a series of processing from a generation of image data in the editing step to a generation of RGB page data into which evaluation incorporation data is incorporated.
Fig. 9 is a flowchart useful for understanding a series of processing from a generation of the RGB page data in the printing step to performing a printing,
Fig. 10 is a view showing an example of a screen for an evaluation entry.
Fig. 11 is a view showing an example of an evaluation printed out.

### DETAILED DESCRIPTION OF PREFERRED EMBODIMENTS

Embodiments of the present invention will be described with reference to the accompanying drawings.

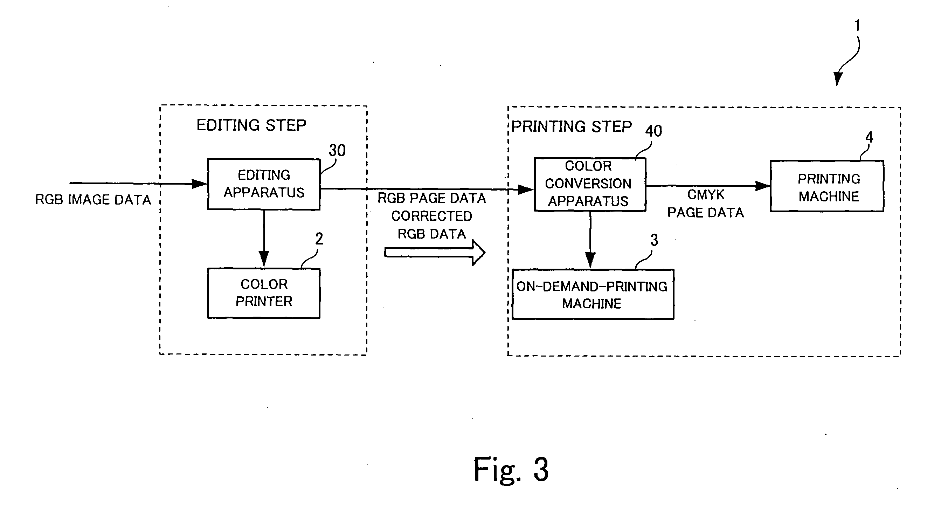

Fig. 3 is an overall structural view of a printing system to which an embodiment of an evaluation output system of the present invention is applied.

A printing system 1 creates a printed matter through an editing step and a printing step. The printing system 1 comprises an editing apparatus 30, a color printer 2, a color conversion apparatus 40, an on-demand-printing machine 3, and a printing machine 4. According to the present embodiment, the editing apparatus 30 and the color printer 2 can deal with only the RGB format of image data, the printing machine 4 can deal with only the CMYK format of image data, and the color conversion apparatus 40 and the on-demand-printing machine 3 can deal with both the RGB format of image data and the CMYK format of image data. And the editing step and the printing step are installed at mutually different areas. The editing apparatus 30 of the editing step is connected via a communication network with the color conversion apparatus 40 of the printing step.

The editing apparatus 30 of the editing step receives the RGB format of image data, which is obtained through photography of the subject by a digital camera. The editing apparatus 30 first performs the color correction processing for correcting a color of an image represented by the RGB format of image data to a color be nice to look at, using a standard color correction profile and the like prepared beforehand. Incidentally, the color correction processing is carried out in accordance with an editor's instruction, and thus it may happen that the color correction processing is omitted. Further, the editing apparatus 30 creates RGB page data incorporating RGB image data, wherein an editor edits a page including an image represented by the RGB image data. The image represented by the RGB page data and the image represented by the RGB image data are printed out by the color printer 2 so as to be confirmed in designs and colors. The RGB page data and the RGB image data, which are created in the editing step, are transmitted via the communication network and the like to the printing step.

In the printing step, the color conversion apparatus 40 performs the color conversion of the RGB image data of the RGB page data to the CMYK format of image data, and CMYK page data after the color conversion is transmitted to the printing machine 4 so that the printing machine is printed. In the printing step, a printing operator designates various sorts of parameters for color conversion so that the color conversion processing is performed in accordance with the various sorts of parameters. Accordingly, there is a need for the printing operator to know accuracy of the color correction processing to be carried out in the editing step and reliability of the color of the image represented by the RGB image data.

The printing system 1 is basically constructed in the manner as mentioned above.

An aspect of the embodiment of the present invention as to the printing system 1 shown in Fig. 3 resides in the point that an evaluation of colors of the image represented by the RGB image data obtained in the editing step is surely transmitted to the printing step. Hereinafter, there will be explained the editing apparatus 30 and the color conversion apparatus 40, which constitute the printing system 1. Incidentally, the editing apparatus 30 and the color conversion apparatus 40 are constituted of the similar personal computers, respectively. Accordingly, with respect to the appearance and the hardware structure, there will be explained the editing apparatus 30 and the color conversion apparatus 40 together applying the same reference numbers.

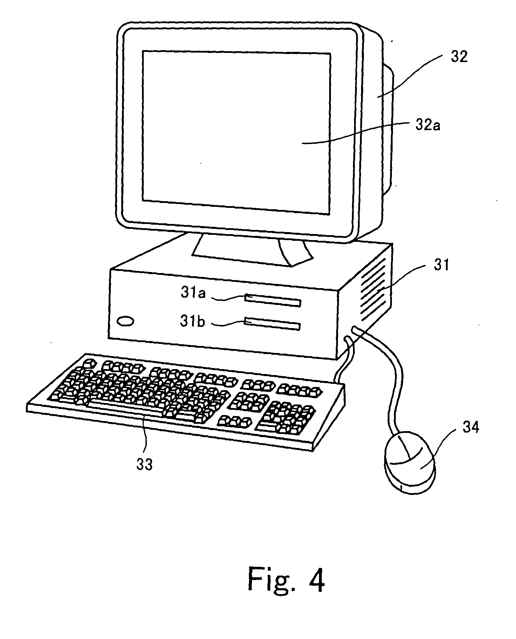

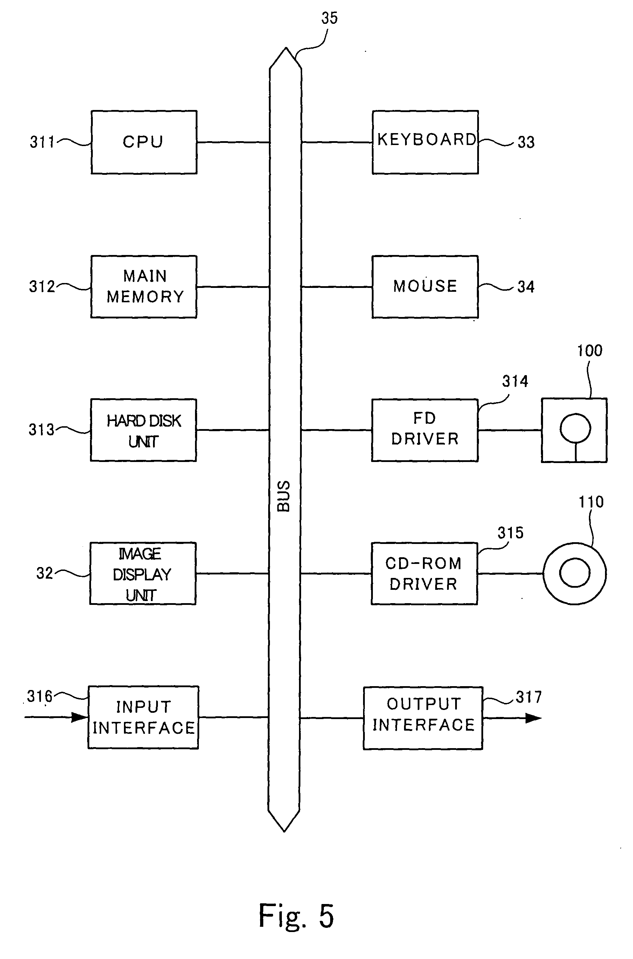

Fig. 4 is a perspective view of a personal computer of the editing apparatus 30 and the color conversion apparatus 40. Fig. 5 is a hardware structural view of the personal computer.

The personal computer of the editing apparatus 30 and the color conversion apparatus 40 comprises, on an external appearance, a main frame unit 31, an image display unit 32 for displaying an image on a display screen 32a in accordance with an instruction from the main frame unit 31, a keyboard 33 for inputting various sorts of information to the main frame unit 31 in accordance with a key operation, and a mouse 34 for inputting an instruction according to, for example, an icon and the like, through designation of an optional position on the display screen 32a, the icon and the like being displayed on the position on the display screen 32a. The main frame unit 31 has a flexible disk mounting slot 31a for mounting a flexible disk (FD), and a CD-ROM mounting slot 31b for mounting a CD-ROM.

The main frame unit 31 comprises, as shown in Fig. 5, a CPU 311 for executing a various types of program, a main memory 312 in which a program stored in a hard disk unit 313 is read out and developed for execution by the CPU 311, the hard disk unit 313 for saving various types of programs and data, a flexible disk drive 314 for accessing a flexible disk (FD) 100 mounted thereon, a CD-ROM drive 315 for accessing a CD-ROM 110 mounted thereon, an input interface 316 that receives image data from the exterior, and an output interface 317 that transmits image data to the exterior. These various types of elements are connected via a bus 35 to the image display unit 32, the keyboard 33 and the mouse 34.

The CD-ROM 110 stores therein a data generating program that causes the editing apparatus 30 in fig. 3 to operate as a data generating apparatus according to an embodiment of the present invention. The CD-ROM 110 is mounted on the CD-ROM drive 315 so that the data generating program, which is stored in the CD-ROM 110, is up-loaded on the editing apparatus 30 and is stored in the hard disk unit 313. Thus, the editing apparatus 30 serves as a data generating apparatus according to an embodiment of the present invention.

Further, a CD-ROM 111 (not illustrated in Fig. 5) stores therein an evaluation output program that causes the color conversion apparatus 40 in fig. 3 to operate as an evaluation output apparatus according to an embodiment of the present invention. The CD-ROM 111 is mounted on the CD-ROM drive 315 so that the evaluation output program, which is stored in the CD-ROM 110, is up-loaded on the color conversion apparatus 40 and is stored in the hard disk unit 313. Thus, the color conversion apparatus 40 serves as an evaluation output apparatus according to an embodiment of the present invention.

Next, there will be explained the data generating program to be executed in the editing apparatus 30 and the evaluation output program to be executed in the color conversion apparatus 40.

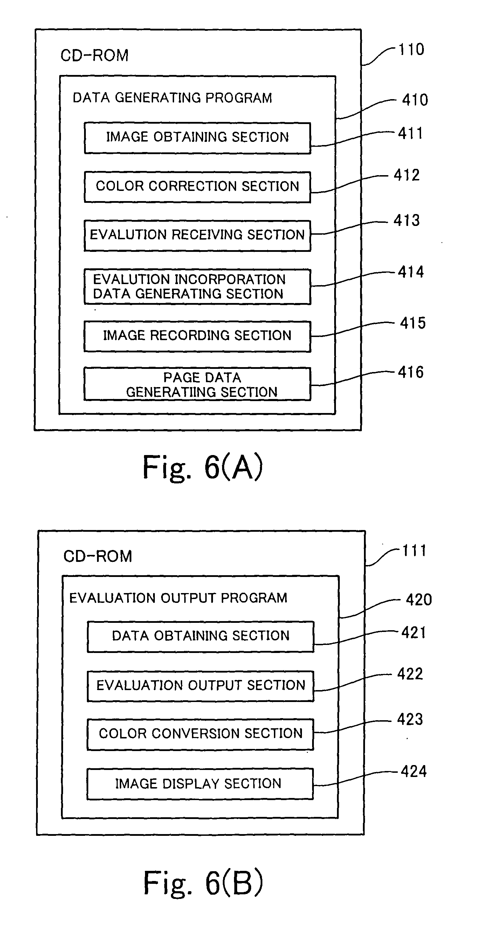

Fig. 6(A) is a conceptual view of the CD-ROM 110 storing a data generating program as an embodiment of the present invention. Fig. 6(B) is a conceptual view of the CD-ROM 111 storing an evaluation output program as an embodiment of the present invention.

A data generating program 410 shown in Fig. 6(A) is executed in the editing apparatus 30 shown in Fig. 1, and causes the editing apparatus 30 to operate as a data generating apparatus according to an embodiment of the present invention. The data generating program 410 comprises an image obtaining section 411, a color correction section 412, an evaluation receiving section 413, an evaluation incorporation data generating section 414, an image recording section 415, and a page data generating section 416.

An evaluation output program 420 shown in Fig. 6(B) is executed in the color conversion apparatus 40 shown in Fig. 1, and causes the color conversion apparatus 40 to operate as an evaluation output apparatus according to an embodiment of the present invention. The evaluation output program 420 comprises a data obtaining section 421, an evaluation output section 422, a color conversion section 423, and an image display section 424.

There will be described later details of the data generating program 410 and the evaluation output program 420.

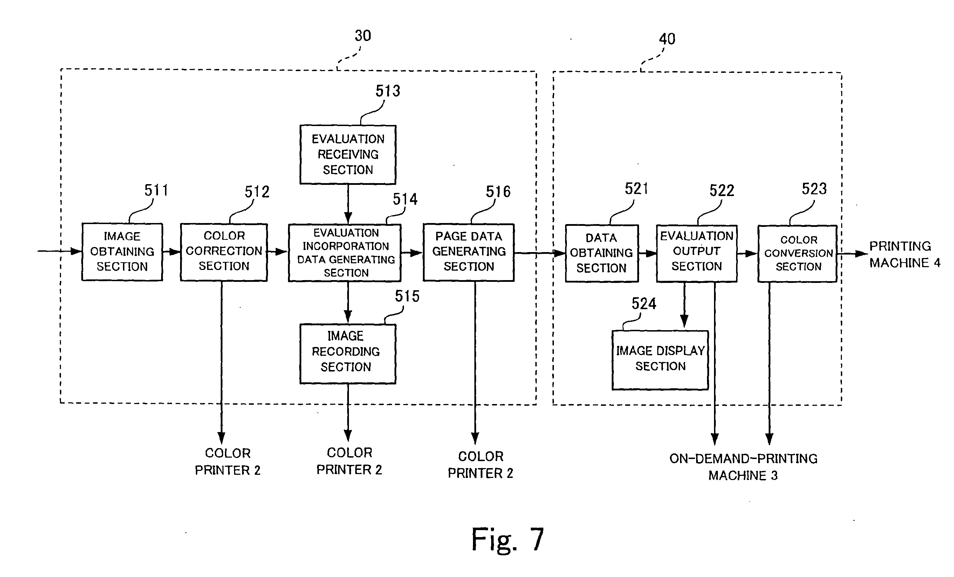

Fig. 7 is a functional block diagram of the editing apparatus 30 and the color conversion apparatus 40.

The editing apparatus 30 comprises an image obtaining section 511, a color correction section 512, an evaluation receiving section 513, an evaluation incorporation data generating section 514, an image recording section 515, and a page data generating section 516. The image obtaining section 511, the color correction section 512, the evaluation receiving section 513, the evaluation incorporation data generating section 514, the image recording section 515, and the page data generating section 516 are constructed on a personal computer by the image obtaining section 411, the color correction section 412, the evaluation receiving section 413, the evaluation incorporation data generating section 414, the image recording section 415, and the page data generating section 416, respectively, which constitute the data generating program 410 shown in Fig. 6(A). Thus, the elements of the editing apparatus 30 shown in Fig. 7 correspond to the elements of the data generating program 410 shown in Fig. 6(A), respectively. It is noted, however, that while the elements of the editing apparatus 30 shown in Fig. 7 are constructed by combinations of the hardware of the personal computer shown in Fig. 4 with an OS and an application program, which are executed in the personal computer, the elements of the data generating program 410 shown in Fig. 6(A) are constructed by only the application program.

The color conversion apparatus 40 shown in Fig. 7 comprises a data obtaining section 521, an evaluation output section 522, a color conversion section 523, and an image display section 524. The data obtaining section 521, the evaluation output section 522, the color conversion section 523, and the image display section 524 are constructed on a personal computer by the data obtaining section 421, the evaluation output section 422, the color conversion section 423, and the image display section 424, respectively, which constitute the evaluation output program 420 shown in Fig. 6(B). Thus, the elements of the color conversion apparatus 40 shown in Fig. 7 correspond to the elements of the evaluation output program 420 shown in Fig. 6(B), respectively. It is noted, however, that while the elements of the color conversion apparatus 40 shown in Fig. 7 are constructed by combinations of the hardware of the personal computer shown in Fig. 4 with an OS and an application program, which are executed in the personal computer, the elements of the evaluation output program 420 shown in Fig. 6(B) are constructed by only the application program.

Hereinafter, there will be explained the respective elements of the editing apparatus 30 and the respective elements of the color conversion apparatus 40 shown in Fig. 7, and in addition the respective elements of the data generating program 410 shown in Fig. 6(A) and the respective elements of the evaluation output program 420 shown in Fig. 6(B).

The image obtaining section 511 of the editing apparatus 30 shown in Fig. 7 obtains RGB format of photographic image data, which is obtained through photography of the subject by a digital camera, in the image taking step that is the pre-step of the editing step. The image obtaining section 511 corresponds to an example of the image obtaining section referred to in the present invention.

The color correction section 512 applies to the RGB image data obtained by the image obtaining section 511 the color correction processing according to a color correcting parameter designated by an editor, and the standard color correction processing using a previously prepared color correction profile so as to generate corrected RGB data. The color correction processing of the color correction section 512 is carried out in accordance with an editor's instruction, and it may happen that the color correction processing is omitted. Hereinafter, for the sake of convenience of the explanation, the RGB image data omitted in the color correction processing is also referred to as the corrected RGB data.

The evaluation receiving section 513 receives an input of an evaluation of a color of the RGB correction image represented by the corrected RGB data and generates evaluation data representative of the evaluation of the color. The evaluation receiving section 513 corresponds to an example of the evaluation receiving section referred to in the present invention.

The evaluation incorporation data generating section 514 incorporates evaluation data into the corrected RGB data to generate evaluation incorporation data. The evaluation incorporation data generating section 514 corresponds to an example of the evaluation incorporation data generating section referred to in the present invention.

The image recording section 515 records the corrected RGB data and the evaluation incorporation data onto the hard disk unit 313 and the CD-ROM 110 shown in Fig. 5. The image recording section 515 corresponds to an example of the image recording section referred to in the present invention.

The page data generating section 516 generates RGB page data incorporating thereinto the evaluation incorporation data, which is representative of the page that arranges RGB correcting image represented by the corrected RGB data included in the evaluation incorporation data. The page data generating section 516 corresponds to an example of the page data generating section referred to in the present invention.

The data obtaining section 521 of the color conversion apparatus 40 obtains the RGB page data incorporating thereinto the evaluation incorporation data, which is generated in the page data generating section 516 of the editing apparatus 30. The data obtaining section 521 corresponds to an example of the data obtaining section referred to in the present invention.

The evaluation output section 522 transmits the evaluation data of the evaluation incorporation data incorporated into the RGB page data to the display section 524 and the on-demand-printing machine 3, and causes the display section 524 and the on-demand-printing machine 3 to output evaluations represented by the evaluation data. The evaluation output section 522 corresponds to an example of the evaluation output section referred to in the present invention.

The image display section 524 displays on the display screen 32a shown in Fig. 5 an evaluation represented by the evaluation data transmitted from the evaluation output section 522. The image display section 524 corresponds to an example of the image display section referred to in the present invention.

The color conversion section 523 converts the corrected RGB data of the evaluation incorporation data incorporated into the RGB page data to a CMYK format of image data, and generates a CMYK format of CMYK page data. The thus generated CMYK page data is transmitted to the printing machine 4 of Fig. 3 so as to generate a page represented by the CMYK page data.

The editing apparatus 30 and the color conversion apparatus 40 are basically constructed in the manner as mentioned above.

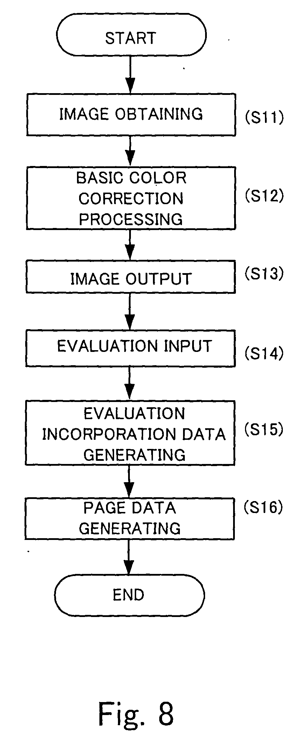

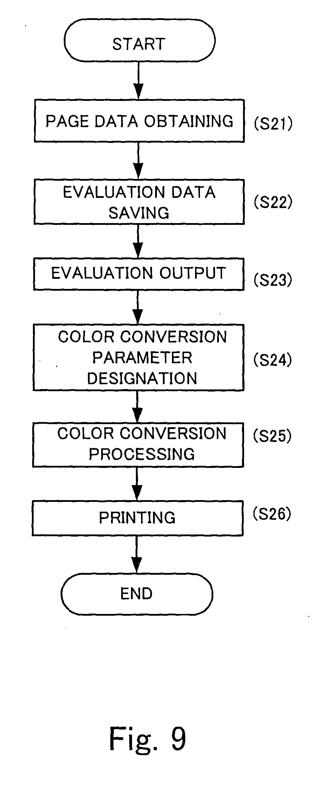

Fig. 8 is a flowchart useful for understanding a series of processing from a generation of image data in the editing step to a generation of RGB page data into which evaluation incorporation data is incorporated. Fig. 9 is a flowchart useful for understanding a series of processing from a generation of the RGB page data in the printing step to performing a printing.

First, there will be explained a series of processing to be carried out in the editing apparatus 30 in accordance with the flowchart of Fig. 8.

The image obtaining section 511 of the editing apparatus 30 obtains the RGB format of image data obtained in the image taking step (step S11 in Fig. 8). The obtained RGB image data is fed to the color correction section 512.

The color correction section 512 applies the color correction processing to the RGB image data obtained in the image obtaining section 511 (step S12 in Fig. 8). The color correction processing is carried out in accordance with an editor's instruction, and thus it may happen that the color correction processing is omitted. According to the present embodiment, a standard color correction profile, which is adopted on a common basis between the editor and the printing operator, is used to apply the standard color correction processing that a color of an image, which is represented by the RGB image data, is nice to look at. The corrected RGB data, which is subjected to the color correction, is fed to the evaluation incorporation data generating section 514 and the color printer 2 of Fig. 3 as well, so that the color printer 2 prints out the RGB correction image represented by the corrected RGB data (step S13 in Fig. 8).

The editor visually confirms the RGB correction image thus printed out and enters the evaluation for a color of the RGB correction image to an image of a color of the printed matter of interest in accordance with a prepared evaluation entry screen (step S14 in Fig. 8).

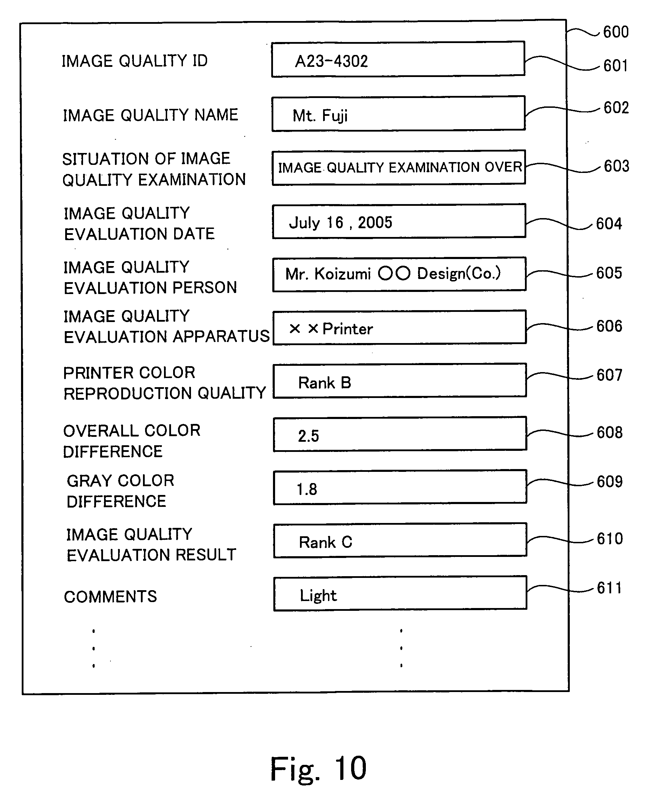

Fig. 10 is a view showing an example of a screen for an evaluation entry.

An evaluation entry screen 600 comprises an image ID entry section 601, an image name entry section 602, an image quality examination situation entry section 603, an image quality evaluation date entry section 604, an image quality evaluation person entry section 605, an image quality evaluation apparatus entry section 606, a printer color reproduction quality entry section 607, an overall color difference entry section 608, a gray color difference entry section 609, an image quality evaluation result entry section 610, and a comment entry section 611.

The image ID entry section 601 adapts to enter an image ID to identify an RGB correction image. The image name entry section 602 adapts to enter an image name of an RGB correction image.

The image quality examination situation entry section 603 adapts to enter information as to whether an editor confirm a color of the RGB correction image. According to the present embodiment, in the event that an editor confirms that the color of the RGB correction image is nice to look at and is to be used as a color sample, an "image quality examination over" is entered; in the event that the editor confirms that the color of the RGB correction image is different from the intended color and is not to be used as a color sample, an "image quality examination pending" is entered; and in the event that the color correction processing is not applied in the step S12 and the image, which is obtained in the image taking step, is adopted, a "photographic original" is entered.

The image quality evaluation date entry section 604 adapts to enter date of the evaluation. The image quality evaluation person entry section 605 adapts to enter person's name of the editor who evaluates. The image quality evaluation apparatus entry section 606 adapts to enter a trade name of the color printer 2 shown in Fig. 3, which prints out the RGB correction image.

The color printer 2 previously prints out a color patch composed of a plurality of colors of patches mutually different colors, and the editor measures chromaticity of the plurality of colors of patches. The printer color reproduction quality entry section 607 adapts to enter a rank in which an average color difference between the measured chromaticity values and the target chromaticity value is placed in a category. The overall color difference entry section 608 adapts to enter the average color difference. The gray color difference entry section 609 adapts to enter an average color difference in a gray that is particularly important color in printing.

The image quality evaluation result entry section 610 adapts to enter a rank in which color reproduction quality, such as brightness of the primary color and the secondary color, a gray balance, and reproduction quality of skin color, in the RGB correction image, and reproduction quality of color tone, such as overall luminous intensity, highlight reproduction quality, shadow reproduction quality, and tone jump, are placed in a category.

The comment entry section 611 adapts to enter editor's comments, such as "light up", "modulate", "remove color fog", "remove color muddiness", be soft", and "scatter catch light (lights of glass and metal).

In addition to the above-mentioned items, there are entered, for example, information such as photographic date as to the photography in the image taking step, lighting environment, a cameraman, a camera, and exposure conditions, a format of a film saving the RGB correction image, a data size, an existence of data compression, and an image correction instruction.

An evaluation of the color entered by the editor is received by the evaluation receiving section 513 in Fig. 7. The evaluation receiving section 513 generates evaluation data representative of evaluation of the color, and transmits the generated evaluation data to the evaluation incorporation data generating section 514.

The evaluation incorporation data generating section 514 incorporates evaluation data transmitted from the evaluation receiving section 513 into the corrected RGB data transmitted from the color correction section 512 to generate evaluation incorporation data (step S15 in Fig. 8). The thus generated evaluation incorporation data and the corrected RGB data are fed to the image recording section 515 and the page data generating section 516.

The image recording section 515 records the evaluation incorporation data and the corrected RGB data on the hard disk unit 313 in Fig. 5. The evaluation incorporation data and the corrected RGB data are used at the time of the page editing which will be explained next, and also re-used at the time of the editing work repeatedly. It is more effective that the evaluation incorporation data and the corrected RGB data are fed to the color printer 2 to print out evaluation and the corrected RGB data, so that the associated print is created and transmitted to the printing step.

An editor uses a page editing software to edit a page in which the RGB correction image is arranged. At that time, the page data generating section 516 generates RGB page data representative of the page edited by the editor, into which the evaluation incorporation data transmitted from the evaluation incorporation data generating section 514 is incorporated (step S16 in Fig. 8). The thus generated RGB page data is fed to the color printer 2 shown in Fig. 1 so as to print out an RGB page image represented by the RGB page data.

The editor confirms a design of the page through the RGB page image thus printed out. The RGB page data, which is subjected to the editor's confirmation in design, is transmitted via the network to the data obtaining section 521 of the color conversion apparatus 40.

The explanation of the processing in the editing step shown in Fig. 8 is terminated with the above-mentioned description, and next there will be explained a series of processing to be carried out in the color conversion apparatus 40 using the flowchart of Fig. 9.

The RGB page data transmitted from the editing apparatus 30 is obtained by the data obtaining section 521 in Fig. 7 (step S21 in Fig. 9). The thus obtained RGB page data is transmitted to the evaluation output section 522.

The evaluation output section 522 first obtains evaluation data of the evaluation incorporation data, which is incorporated into the RGB page data. The obtained evaluation data is associated with the image ID and is saved in the hard disk unit 313 of the hard disk unit 313 of the color conversion apparatus 40 shown in Fig. 5 (step S22 in Fig. 9).

The color conversion apparatus 40 prepares an evaluation output screen that is provided with an "evaluation print button" for printing out an evaluation represented by evaluation data, an "evaluation display button" for displaying an evaluation on the display screen 32a, "detail/outline radio buttons" for designating a selective output between detail and outline of an evaluation when the evaluation is outputted, an "image ID input section" for designating an image ID of an image to be outputted in an evaluation. A printing operator designates an output way of an evaluation in accordance with the evaluation output screen.

When the output way of an evaluation is designated, the evaluation output section 522 outputs an evaluation represented by the evaluation data of the evaluation incorporation data incorporated into the RGB page data in accordance with the designated output way of the evaluation (step S23 in Fig. 9). For example, in the event that the "outline radio button" and the "evaluation print button" are designated, the evaluation output section 522 transmits to the on-demand-printing machine 3 shown in Fig. 1 the corrected RGB data of the evaluation incorporation data and a predetermined item of information of the evaluation represented by the evaluation data.

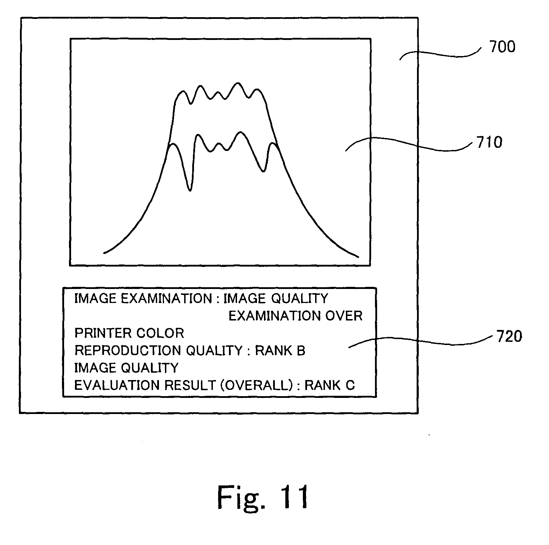

Fig. 11 is a view showing an example of an evaluation printed out.

The on-demand-printing machine 3 adapts to print out an evaluation output image 700 comprising an RGB correction image 710 represented by the corrected RGB data and a predetermined item 720 of the evaluation represented by the evaluation data.

A printing operator confirms the evaluation output image 700, so that the printing operator can recognize a reliability of color of the RGB correction image.

Further, for example, when the printing operator designates the "detail radio button", the "evaluation display button", and the "image ID", the evaluation output section 522 obtains the evaluation data associated with the image ID designated through the hard disk unit 313 and outputs the evaluation data to the image display section 524. The image display section 524 adapts to display an evaluation represented by the evaluation data on the display screen 32a of the color conversion apparatus 40 shown in Fig. 4. At that time, on the display screen 32a of the color conversion apparatus 40, there is displayed the detailed evaluation as shown in Fig. 10.

A printing operator confirms the evaluation displayed on the display screen 32a, or the evaluation printed out by the on-demand-printing machine 3, and designates a color conversion parameter for converting the corrected RGB data of the evaluation incorporation data incorporated into the RGB page data into CMYK format of image data (step S24 in Fig. 9). For example, in the event that the evaluation as shown in Fig. 10 is displayed, the situation of the image quality examination is "image quality examination over", and thus the RGB corrected image, which is obtained through printing out of the corrected RGB data, is used as a color sample, and in view of the comment of "light", there is designated a color conversion parameter for providing an image that is light as a whole.

When the color conversion parameter is designated, the color conversion section 523 shown in Fig. 7 uses the designated color conversion parameter to convert the corrected RGB data into a CMYK format of corrected CMYK data (step S25 in Fig. 9).

The corrected CMYK data is fed to the on-demand-printing machine 3 in Fig. 3 to print out CMYK correction image represented by the corrected CMYK data. A printing operator performs a fine control of the color conversion parameter in such a way that a color of the CMYK correction image is close to a color of the RGB correction image that is the color sample.

The corrected CMYK data, to which the color conversion processing is applied using the decided color conversion parameter, is replaced by the corrected RGB data of the RGB page data to generate a CMYK format of CMYK page data. The thus generated CMYK page data is fed to the printing machine 4 to print out a page represented by the CMYK page data (step S26 in Fig. 9).

Thus, the editing apparatus 30 receives an evaluation of a color of an image represented by image data, and generates evaluation incorporation data in association of the image data with the evaluation data representative of the evaluation. And the color conversion apparatus 40 performs a color conversion processing in accordance with the evaluation represented by the evaluation data of the evaluation incorporation data. This feature makes it possible to avoid a difference in image as to a color of an image between an editor and a printing operator, and also to greatly reduce cost and time for a series of printing processing.

Incorporation of the evaluation incorporation data into the page data makes it possible to surely convey an evaluation as to a color of an image to the subsequent printing step using the conventional printing system.

According to the above-mentioned embodiments, as a storage medium for storing a data generating program and an evaluation output program, there is used a CD-ROM by way of example. However, the storage medium for storing the data generating program and the evaluation output program is not restricted to the CD-ROM, and any one is acceptable, as the storage medium, for example, MO, FD and a magnetic tape. Further, it is acceptable that the data generating program and the evaluation output program are directly supplied via a communication network to a computer, without passing through the storage medium.

Further, according to the above-mentioned embodiments, the editing apparatus 30 is connected via the communication network with the color conversion apparatus 40 so that the evaluation incorporation data is transferred via the communication network. In the evaluation output system of the present invention, however, it is acceptable that the evaluation incorporation data, which is generated in the evaluation incorporation data generating section, is recorded in a recording medium such as a CD-ROM, and the data obtaining section obtains the evaluation incorporation data recorded on the recording medium.

Furthermore, according to the above-mentioned embodiments, there is generated the evaluation incorporation data into which evaluation data is incorporated into the image data. However, it is acceptable that the data set generation section referred to in the present invention is to provide an association between image data and evaluation data, for example, in such a way that an evaluation image data set of the image data and the evaluation data is saved in the same holder.

As mentioned above, according to the present invention, it is possible to provide a data generating apparatus capable of surely conveying information for generating an image of a preferable color to the subsequent step, an evaluation output apparatus, an evaluation output system, a data generating program storage medium, and an evaluation output program storage medium.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

## Claims

1. A data generating apparatus comprising:
an image obtaining section that obtains image data representative of an image;
an evaluation receiving section that receives an input of an evaluation as to a color of the image represented by the image data obtained by the image obtaining section; and
a data set generation section that generates an evaluation image data set in such a way that the image data obtained by the image obtaining section is associated with evaluation data representative of the evaluation received by the evaluation receiving section.

2. A data generating apparatus according to claim 1, wherein the data generating apparatus further comprises an image recording section that records the evaluation image data set generated in the data set generation section on a recording medium.

3. A data generating apparatus according to claim 1, wherein the data set generation section generates an evaluation incorporation data corresponding to the evaluation image data set in such a way that the evaluation data is incorporated into the image data.

4. A data generating apparatus according to claim 1, wherein the data generating apparatus further comprises a page data generation section that generates page data representative of a page in which an image is arranged, in such a way that the evaluation image data set generated in the data set generation section is incorporated into the page data.

5. An evaluation output apparatus comprising:
a data set obtaining section that obtains an evaluation image data set in which image data representative of an image is associated with evaluation data representative of an evaluation as to a color of the image represented by the image data; and
an evaluation output section that causes an output apparatus to output the evaluation represented by the evaluation data of the evaluation image data set obtained by the data set obtaining section.

6. An evaluation output apparatus according to claim 5, wherein the evaluation output apparatus further comprises an image display section that displays an image based on the image data, and
the evaluation output section causes the output apparatus to output the evaluation, wherein as the output apparatus the image display section is used.

7. An evaluation output apparatus according to claim 5, wherein as the output apparatus a printer for printing out images and characters on a sheet is used, so that the evaluation output section causes the printer to print out the evaluation.

8. An evaluation output system comprising:
an image obtaining section that obtains image data representative of an image;
an evaluation receiving section that receives an input of an evaluation as to a color of the image represented by the image data obtained by the image obtaining section;
a data set generation section that generates an evaluation image data set in such a way that the image data obtained by the image obtaining section is associated with evaluation data representative of the evaluation received by the evaluation receiving section;
a data set obtaining section that obtains the evaluation image data set;
an evaluation output section that causes an output apparatus to output the evaluation represented by the evaluation data of the evaluation image data set obtained by the data set obtaining section.

9. A data generating program storage medium storing a data generating program which causes a computer to operate as a data generating apparatus, when the data generating program is executed in the computer, the data generating apparatus comprising:
an image obtaining section that obtains image data representative of an image;
an evaluation receiving section that receives an input of an evaluation as to a color of the image represented by the image data obtained by the image obtaining section; and
a data set generation section that generates an evaluation image data set in such a way that the image data obtained by the image obtaining section is associated with evaluation data representative of the evaluation received by the evaluation receiving section.

10. An evaluation output program storage medium storing an evaluation output program, which causes a computer to operate as evaluation output program, when the evaluation output program is executed in the computer, the evaluation output apparatus comprising:
a data set obtaining section that obtains an evaluation image data set in which image data representative of an image is associated with evaluation data representative of an evaluation as to a color of the image represented by the image data; and
an evaluation output section that causes an output apparatus to output the evaluation represented by the evaluation data of the evaluation image data set obtained by the data set obtaining section.
